# EUROPEAN PATENT APPLICATION

(11) **EP 3 073 138 A1**
(43) Date of publication of application: **28.09.2016**
(21) Application number: 14864315.8
(22) Date of filing: 18.11.2014
(51) Int. Cl.: F16C 33/58, F16C 19/26, F16C 19/36, F16C 33/34, F16C 33/66, F16H 57/04

(54) **CYLINDRICAL ROLLER BEARING AND BEARING DEVICE FOR TRANSMISSION**

(30) Priority: 21.11.2013 JP 2013241280; 05.09.2014 JP 2014181461
(71) Applicant: NSK Ltd., Tokyo 141-8560 (JP)
(72) Inventor: KATOU, Kouji, Fujisawa-shi Kanagawa 251-8501 (JP); TANAKA, Susumu, Fujisawa-shi Kanagawa 251-8501 (JP); ASAMI, Tetsuya, Fujisawa-shi Kanagawa 251-8501 (JP); UEMURA, Kazuhiro, Fujisawa-shi Kanagawa 251-8501 (JP)
(74) Representative: Grünecker Patent- und Rechtsanwälte PartG mbB
(86) International application number: PCT/JP2014/080545
(87) International publication number: WO 2015/076271

(57) **Abstract**

A cylindrical roller bearing (1) is provided with an outer race (10), an inner race (20), and a plurality of cylindrical rollers (30). The outer race (10) has on the inner peripheral surface thereof an outer-race raceway surface (11) and a pair of outer-race flanges (12) provided on both axial-direction sides of the outer-race raceway (11). The inner race (20) has on the outer peripheral surface thereof an inner-race raceway (21) and an inner race flange (22) provided on one axial-direction side of the inner-race raceway (21). The cylindrical rollers (30) are arranged between the outer-race raceway (11) and the inner-race raceway (21). The radial-direction height (A) of the outer-race flanges (12) is greater than the radial-direction height (B) of the inner-race flange (22). The radial-direction gap (C) between the outer-race flanges (12) and the inner-race flange (22) is set to 2 mm or less. Consequently, the incidence of edge loading due to a thrust load is minimized and the state of lubrication inside the bearing is improved, which makes it possible to markedly reduce the size of a highly durable cylindrical roller bearing and transmission.

## Description

### Technical Field

The present invention relates to a cylindrical roller bearing and a transmission bearing device.

### Background Art

In a transmission of an automobile, from a viewpoint of improving a fuel econo my, there is a strong demand for miniaturization and high efficiency. Generally, compared to a tapered roller bearing used for receiving a preload, a ball bearing has remarkably small torque and is often used in a transmission. However, there are cases where the ball bearing is likely to be increased in size and is restricted. For example, as a bearing for supporting a gear, there are cases of a support structure in which one side is a cylindrical roller bearing used without applying a preload and the other side is the ball bearing. The cylindrical roller bearing is caused to support only a radial load. The ball bearing receives a thrust load generated in both directions due to engagement of gears. In this case, the one side can be remarkably decreased in size by using the cylindrical roller bearing. However, the thrust load in both directions is required to be supported by the ball bearing on the other side. Therefore, the bearing is likely to be increased in size, and there are cases of being restricted in a layout of a unit.

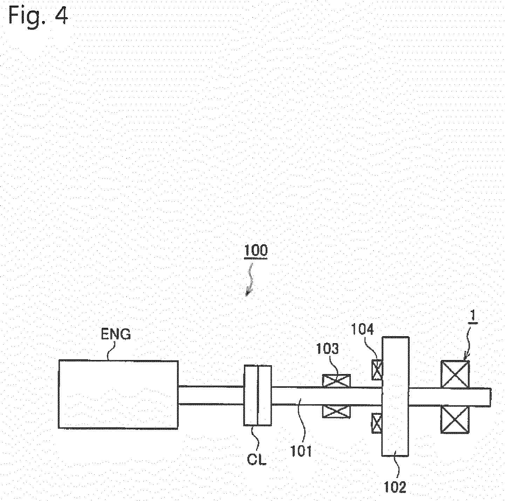

In addition, as a configuration in which a shaft length is shortened so as to achieve miniaturization of a transmission, there is a known configuration illustrated in Fig. 4. In a transmission 100 schematically illustrated in Fig. 4, engine torque output from an engine ENG is input to an input shaft 101 via a clutch CL. A gear 102 provided in the input shaft 101 and a gear of a driven shaft (not illustrated) are engaged with each other. Then, the engine torque is transmitted to the driven shaft. In such an input shaft 101 and a driven shaft, a cylindrical roller bearing 1 is provided in one side, and a combination of a slide bearing 103, a needle roller thrust bearing 104 having a thin width, and the like is used for the other side. Thus, it is possible to achieve a remarkable decrease of the bearing in size.

In addition, as the cylindrical roller bearing, a bearing in which inner side surfaces of rib portions of an inner ring and an outer ring are inclined and an end face of a cylindrical roller is subjected to crowning has been devised (for example, refer to Patent Documents 1 and 2).

### Prior Art Document

### Patent Document

Patent Document 1: JP-A-2002-70874
Patent Document 2: JP-A-2004-353744

### Summary of the Invention

### Problem to be Solved

Incidentally, in a configuration of a bearing in a transmission 100 illustrated in Fig. 4, a cylindrical roller bearing 1 has a configuration in which a thrust load is received at the time of driving or at the time of coasting. Particularly, in a case of being used under high-speed rotations such as an input shaft 101 or a driven shaft, seizure life becomes a major problem. Particularly, due to deflection and the like of the input shaft 101 caused by the thrust load, in an inner ring of the cylindrical roller bearing 1 which is fixed to the input shaft 101, a misalignment occurs relatively with respect to an outer ring. Therefore, when the outer and inner rings relatively incline, a significant edge load is generated in both end portions of a cylindrical roller. In addition, in the cylindrical roller bearing 1, lubrication is performed while supplying lubricating oil from the outside. However, when the quantity of supplied oil is temporarily decreased, there is the possibility of an occurrence of seizure. The cylindrical roller bearings disclosed in Patent Documents 1 and 2 are a technology for preventing generation of an edge load and an occurrence of seizure. However, usage for the above-described purpose is not considered. Thus, a further improvement is required.

The present invention has been made in consideration of the above-referenced problem, and an object thereof is to provide a transmission bearing device in which an edge load occurring due to a thrust load is prevented, and an excellently durable cylindrical roller bearing and a drastically miniaturized transmission can be realized by causing a lubricated state in the bearing interior to be favorable.

### Means for Solving the Problem

The object of the present invention is achieved by following configuratio ns.
(1) A cylindrical roller bearing comprising:
   an outer ring having, on an inner circumferential surface, an outer ring raceway and a pair of outer ring ribs which are provided on both sides of the outer ring raceway in an axial direction;
   an inner ring having, on an outer circumferential surface, an inner ring raceway and an inner ring rib which is provided on one side of the inner ring raceway in the axi al direction; and
   a plurality of cylindrical rollers disposed between the outer ring raceway and the inner ring raceway,
   wherein a radial clearance between the outer ring rib and the inner ring rib is set to be equal to or less than 2 mm, and
   a radial height of the outer ring rib is greater than a radial height of the inner ring rib.
(2) The cylindrical roller bearing according to (1).
   wherein when W represents a bearing width and D represents a bearing outside diameter, D/W is equal to or greater than 3.0, and
   when Da represents a roller diameter of the cylindrical roller and L represents a roller length of the cylindrical roller, L/Da ranges from 1.2 to 1.8.
(3) The cylindrical roller bearing according to (1) or (2),
   wherein a rolling contact surface of the cylindrical roller is subjected to crowning to be formed in a single circular arc having a curvature radius ranging from 300 mm to 700 mm, and
   a slope ranging from 10 degrees to 30 degrees is formed on a contact surface of the outer ring rib and the inner ring rib with respect to the cylindrical roller.
(4) The cylindrical roller bearing according to (1) or (2),
   wherein a rolling contact surface of the cylindrical roller is subjected to composite crowning in which a central portion thereof in the axial direction is a single circular arc having a curvature radius ranging from 3,000 mm to 4,000 mm and both side portions of the central portion in the axial direction have logarithmic curve shape so as to cause an amount of a drop to change, and
   a slope ranging from 10 degrees to 30 degrees is formed on a contact surface of the outer ring rib and the inner ring rib with respect to the cylindrical roller.
(5) A transmission bearing device,
   wherein an input shaft or a driven shaft to which engine torque is input is rotatably supported by at least a slide bearing and the cylindrical roller bearing according to any one of (1) to (4), and
   the cylindrical roller bearing bears a thrust load in one direction and permits a relative misalignment between the outer ring and the inner ring.
(6) The transmission bearing device according to (5),
   wherein lubricating oil is supplied to the cylindrical roller through an ope ning portion between the outer ring and the inner ring on a side opposite to a s ide on which the inner ring rib is provided.

### Effects of Invention

According to the cylindrical roller bearing of the present invention, the radial height of the outer ring rib is greater than the radial height of the inner ring rib. Accordingly, in a case where a relative misalignment occurs between the outer ring and the inner ring, the cylindrical roller is stably held on the outer ring raceway by the outer ring rib having a greater height. Therefore, generation of an edge load can be prevented. In addition, the radial clearance between the outer ring rib and the inner ring rib is set to be equal to or less than 2 mm, even in a case where the quantity of supplied oil is temporarily decreased, it is possible to prevent seizure occurring due to an influence of a portion of lubricating oil remaining in the bearing interior.

In addition, according to the transmission bearing device of the present invention, the input shaft or the driven shaft to which engine torque is input is rotatably supported by the slide bearing and the above-described cylindrical roller bearing. The cylindrical roller bearing bears the thrust load in one direction and permits the relative misalignment between the outer ring and the inner ring. Therefore, it is possible to realize a drastically miniaturized transmission.

### Brief Description of Drawings

Fig. 1 is a half sectional view of a main portion of a cylindrical roller bearing according to an embodiment of the present invention.
Fig. 2 is a view illustrating a modification example of a cylindrical roller in Fig. 1.
Fig. 3 is an enlarged view of a portion of III in Fig. 1.
Fig. 4 is a schematic view illustrating a general transmission which can also be applied to the present invention.

### Description of Embodiments

Hereinafter, a cylindrical roller bearing and a transmission bearing device according to an embodiment of the present invention will be described in detail with reference to the drawings.

The cylindrical roller bearing of the present embodiment is used in a transmissi on 100 which is illustrated in Fig. 4 and includes an input shaft 101 or a driven shaft to which engine torque is input. The input shaft 101 or the driven shaft rotates at a rotati ng speed while having the same maximum rotating speed as the engine (7,500 rpm Max ).

In other words, in Fig. 4, a radial load acting on the input shaft 101 is received by a cylindrical roller bearing 1 and a slide bearing 103. A thrust load (axial load) generated due to engagement of an input gear in a coasting state (at the time of engine braking) is received by an outer ring rib 12 and an inner ring rib 22 of the below-described cylindrical roller bearing 1. A thrust load acting in the opposite direction at the time of driving is received by a needle roller thrust bearing 104.

In the transmission 100 of the present embodiment, in place of the slide bearing 103 and the needle roller thrust bearing 104, a different type of bearing such as a shell-type cylindrical roller bearing, a ball bearing, and the like may be applied. In this case, the thrust load acting in the opposite direction at the time of driving may be supported by the ball bearing or the like in place of the needle roller thrust bearing. In addition, in a case where the thrust load is received by the needle roller thrust bearing, the radial load can be received by the slide bearing, the shell-type cylindrical roller bearing, or the like.

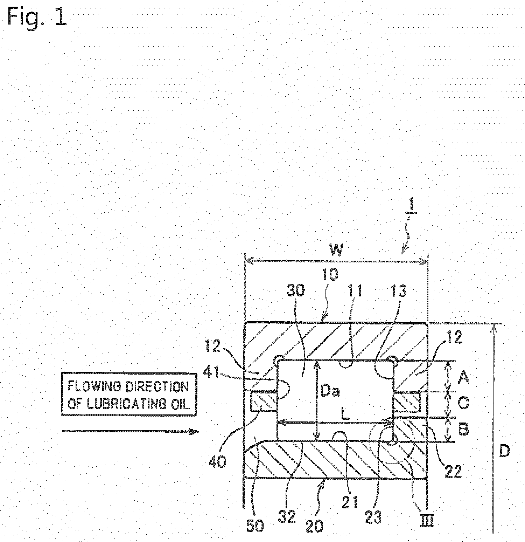

In addition, as illustrated in Fig. 1, the cylindrical roller bearing 1 of the present embodiment applied to the transmission 100 includes an outer ring 10, an inner ring 20, a plurality of cylindrical rollers 30, a cage 40. The outer ring 10 has, on an inner circumferential surface, an outer ring raceway 11 and a pair of outer ring ribs 12 which are provided on both sides of the outer ring raceway 11 in the axial direction. The inner ring 20 has, on an outer circumferential surface, an inner ring raceway 21 and an inner ring rib 22 which is provided on one side of the inner ring raceway 21 in t he axial direction. The plurality of cylindrical rollers 30 are disposed between the outer ring raceway 11 and the inner ring raceway 21. The cage 40 is outer ring guid e type cage. The cage 40 has a plurality of pockets 41 which holds the cylindrical rollers 30 at predetermined intervals.

In other words, the cylindrical roller bearing 1 has a configuration in which the outer ring ribs 12 are provided at both end portions of the outer ring 10 in the axial direction, the inner ring rib 22 is provided at one end portion of the inner ring 20 in the axial direction, and a thrust load in only one direction can be recereived in the above-described transmission illustrated in Fig. 4.

Therefore, due to an influence such as deflection of the input shaft caused by the thrust load, precision of components, and the like, the inner ring 20 of the cylindrical roller bearing 1 fixed to the input shaft inclines relatively to the outer ring 10. If the outer ring 10 and the inner ring 20 incline relatively to each other, significant edge loads are generated at both end portions of the cylindrical roller 30. In order to prevent the occurrence of flaking caused by the edge load, rolling contact surfaces 32 (surfaces which rolling-contact with the outer ring raceway 11 and the inner ring raceway 21) of the cylindrical roller 30 are subjected to crowning.

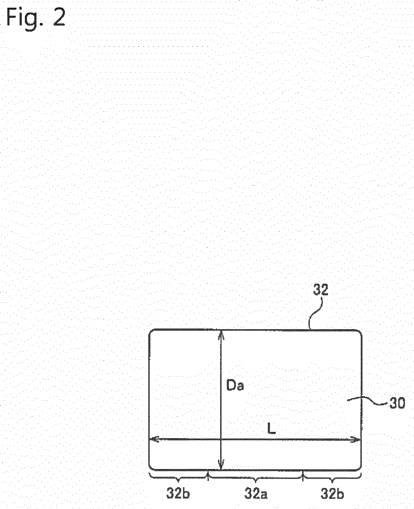

Crowning on the rolling contact surface 32 may be formed in a single circular arc having the curvature radius ranging from 300 mm to 700 mm. Otherwise, as illustrated in Fig. 2, crowning on the rolling contact surface 32 may be composite crowning in which a central portion 32a of the rolling contact surface 32 in the axial direction is a single circular arc having the curvature radius ranging from 3,000 mm to 4,000 mm and both side portions 32b of the central portion 32a in the axial direction have logarithmic curve shape so as to cause the amount of a drop to change drastically.

In a case of the composite crowning, the central portion 32a configured to be a single circular arc which has an axial length ranging approximately from 40% to 50% of a roller length L, and the amounts of a drop at the end portions on the rolling contact surface 32 range approximately from 0.2% to 0.5% of a roller diameter Da.

In such composite crowning, compared to crowning to be formed in a single circular arc, the maximum contact surface pressure can be reduced. Therefore, an improvement of life of the bearing can be expected. Furthermore, a seated state of the cylindrical roller 30 is improved. Therefore, a skew of the cylindrical roller 30 is reduced, and thus, generation of heat can be prevented.

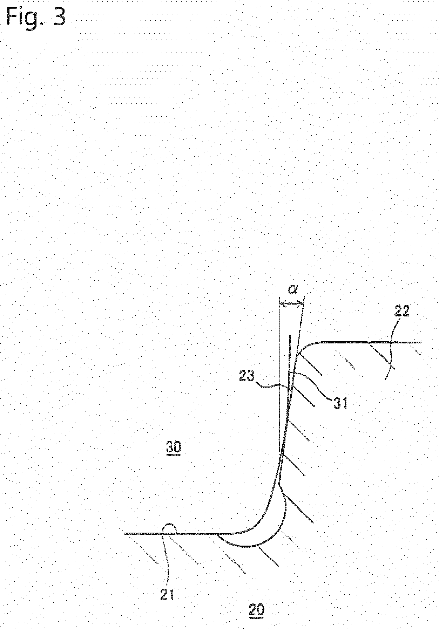

In addition, as illustrated in Fig. 3, when a relative misalignment occurs between the outer ring 10 and the inner ring 20, there is a possibility that the cylindrical roller 30 tilts so as to be likely seized. In order to prevent the seizure, on inner side surfaces (contact surfaces) 13 and 23 of the outer ring rib 12 and the inner ring rib 22 with respect to the cylindrical roller 30, a slope having an angle ranging from 10 degrees to 30 degrees with respect to a radial direction is formed.

Furthermore, an axial end face 31 of the cylindrical roller 30 is subjected to crowning.

In addition, in order to miniaturize a transmission unit (in order to shorten the axial length of the transmission unit), a bearing width W has a D/W value equal to or greater than 3.0 with respect to a bearing outside diameter D. However, if a skew is generated due to a misalignment, there are cases where the seizure life for bearing the thrust load is deteriorated. Therefore, in order to improve the seated state of the cylindrical roller 30, a relationship L/Da between the roller diameter Da and the roller length L ranges from 1.2 to 1.8.

In addition, in a case of the transmission 100 illustrated in Fig. 4, lubricating oil is supplied from the outside. The lubricating oil flows in with respect to the cylindrical roller 30 through an opening portion 50 between the outer ring 10 and the inner ring 20 on a side axially opposite to the side on which the inner ring rib 22 is prov ided. Accordingly, the opening area leading to the bearing interior can be increased, and a sufficient quantity of the lubricating oil can be supplied to the outer ring rib 12 and the inner ring rib 22. The lubricating oil moving in the axial direction lubricates the inner ring rib 22, and the lubricating oil moving in a direction of the outside diameter due to centrifugal force lubricates the outer ring rib 12. Therefore, it is possible to favorably maintain the lubricated state inside the cylindrical roller bearing 1.

Moreover, in consideration of a thickness of the cage 40, a radial clearance C which is present between the outer ring rib 12 and the inner ring rib 22 is set to be equal to or less than 2 mm, and is preferably set to be equal to or less than 1.5 mm. Therefore, even in a case where the quantity of supplied oil is temporarily decreased, it is possible to prevent seizure occurring due to an influence of a portion of the lubricating oil remaining in the bearing interior.

Furthermore, a radial height A of the outer ring rib 12 is greater than a radial height B of the inner ring rib 22 (A > B). Preferably, a range of the height of each rib is set to 1.2B ≤ A ≤ 1.5B, and is more preferably set to 1.2B ≤ A ≤ 1.4B. In addition, the slope angle of the inner side surface 23 of the inner ring rib 22 may be greater than the slope angle of the inner side surface 13 of the outer ring rib 12.

Accordingly, in a case where a relative misalignment occurs between the outer ring 10 and the inner ring 20, the cylindrical roller 30 is stably held on the outer ring raceway 11 by both the outer ring ribs 12 of the outer ring 10 having a greater height. Therefore, generation of an edge load is prevented. By increasing the slope angle of the inner side surface 23 of the inner ring rib 22, even in a case where the inner ring 20 and the cylindrical roller 30 relatively incline, generation of an edge load can be prevented.

In addition, since the cage 40 is an outer ring guide type cage, a clearance between a bore diameter of the outer ring rib 12 and outside diameter surfaces at both ends of the cage 40 is set to be small. Accordingly, the lubricating oil flowing in through a bore diameter side of the cage 40 lubricates the outer ring rib 12 without flowing out to an external space, and the cage 40 is guided by the outer ring rib 12 so as to be able to stably rotate even during high-speed rotating.

As described above, the cylindrical roller bearing 1 according to the present embodiment includes the outer ring 10, the inner ring 20, and the plurality of cylindrical rollers 30. The outer ring 10 has, on the inner circumferential surface, the outer ring raceway 11 and the pair of outer ring ribs 12 which are provided on both sides of the outer ring raceway 11 in the axial direction. The inner ring 20 has, on an outer ci rcumferential surface, the inner ring raceway 21 and the inner ring rib 22 which is provided on one side of the inner ring raceway 21 in the axial direction. The plurality of cylindrical rollers 30 are disposed between the outer ring raceway 11 and the inner ring raceway 21. The radial height A of the outer ring rib 12 is greater than the radial height B of the inner ring rib 22. Accordingly, in a case where a relative misalignment occurs between the outer ring 10 and the inner ring 20, the cylindrical roller 30 is stably held on the outer ring raceway 11 by the outer ring ribs 12 having greater heights. Therefore, generation of an edge load can be prevented. In addition, the radial clearance C between the outer ring rib 12 and the inner ring rib 22 is set to be equal to or less than 2 mm, and thus, even in a case where the quantity of supplied oil is temporarily decreased, it is possible to prevent seizure occurring due to an influence of a portion of the lubricating oil remaining in the bearing interior.

In addition, when W represents the bearing width and D represents the bearing outside diameter, D/W is equal to or greater than 3.0. When Da represents the roller diameter of the cylindrical roller 30 and L represents the roller length, L/Da ranges from 1.2 to 1.8. Therefore, it is possible to shorten the axial length of the bearing and to prevent generation of a skew.

Furthermore, the rolling contact surface 32 of the cylindrical roller 30 is subjected to crowning to be formed in a single circular arc having the curvature radius ranging from 300 mm to 700 mm or is subjected to composite crowning in which the central portion 32a in the axial direction is a single circular arc having the curvature radius ranging from 3,000 mm to 4,000 mm and both the side portions 32b of the central portion 32a in the axial direction have the logarithmic curve shape so as to cause the amount of a drop to change. In addition, on the contact surfaces of the outer ring rib 12 and the inner ring rib 22 with respect to the cylindrical roller 30, the slope ranging from 10 degrees to 30 degrees is formed. Therefore, even in a case where a relative misalignment occurs between the outer ring 10 and the inner ring 20, it is possible to prevent generation of an edge load, and even though the cylindrical roller 30 tilts, it is possible to prevent seizure.

In a case where the rolling contact surface 32 of the cylindrical roller 30 is subjected to composite crowning, a maximum contact surface pressure can be reduced, an improvement of life of the bearing can be expected, and the seated state of the cylindrical roller 30 can be improved. Therefore, a skew of the cylindrical roller 30 is reduced, and thus, generation of heat can be prevented.

In addition, according to the transmission bearing device of the present embodiment, the input shaft 101 or the driven shaft to which engine torque is input is rotatably supported by at least the slide bearing 103 and the above-described cylindrical roller bearing 1. The cylindrical roller bearing 1 bears a thrust load in one direction and permits a relative misalignment between the outer ring 10 and the inner ring 20. Therefore, it is possible to realize the drastically miniaturized transmission 100.

Furthermore, the lubricating oil is supplied to the cylindrical roller 30 through the opening portion 50 between the outer ring 10 and the inner ring 20 on the side opposite to the side on which the inner ring rib 22 is provided. Accordingly, the opening area leading to the bearing interior can be increased, and a sufficient quantity of the lubricating oil can be supplied to the outer ring rib 12 and the inner ring rib 22.

### Example

Here, a verification experiment of the cylindrical roller bearing 1 of the present embodiment was performed while changing the shape of the rolling contact surface 32 of the cylindrical roller 30, and the effect thereof was confirmed. The verification experiment was performed under the following conditions and target lifetime was set to 120 Hrs.

### Conditions of Verification Experiment

- Load: 0.4C (C: basic dynamic load rating)
- Rotating speed: 3,000 rpm
- Lubricated condition: ATF, 120°C, oil bath
- Contamination: 0.05 g/L (size of contamination: 10 µm to 50 µm, iron-based)
- Misalignment: 0 rad (no misalignment), 3/1,000 rad (with misalignment)

**[Table 1]**

| | | | | |
|---|---|---|---|---|
| Example (1) Single R Crowning | Single R Dimension [mm] | Life [hrs] | | Determination |
| | | No Misalignment | With Misalignment | |
| | 300 | 131 | 131 | Pass |
| | 700 | 150 | 145 | Pass |
| Comparative Example (1) Single R Crowning | Single R Dimension [mm] | Life [hrs] | | Determination |
| | | No Misalignment | With Misalignment | |
| | 200 | 113 | 113 | Fail |
| | 800 | 153 | 74 | Fail |

Table 1 shows experimental results in a case of using the cylindrical roller 30 in which the rolling contact surface 32 was subjected to crowning to be formed in a single circular arc. As can be seen from Table 1, when the curvature radius ranged from 300 mm to 700 mm, it was possible to confirm that the target lifetime was satisfied even though a relative misalignment was present between the cylindrical roller 30 and the raceway. Meanwhile, in a case where the curvature radius was 200 mm, the life was not deteriorated even though a misalignment was present. However, due to the high contact surface pressure, it did not reach the target lifetime. In addition, in a case where the curvature radius was 800 mm, when a misalignment was present, the target lifetime could not be satisfied.

**[Table 2]**

| | | | | | | |
|---|---|---|---|---|---|---|
| | Central Portion R [mm] | Single R Portion Length /Roller Length [%] | Amount of Drop of End Portion/Roller Diameter [%] | Life [hrs] | | Determination |
| | | | | No Misalignme nt | With Misalignme nt | |
| Example (2) Composite Crowning | 3,000 | 40 | 0.5 | 181 | 159 | Pass |
| | | | 0.2 | 183 | 157 | Pass |
| | | 50 | 0.5 | 187 | 165 | Pass |
| | | | 0.2 | 189 | 165 | Pass |
| | 4,000 | 40 | 0.5 | 191 | 166 | Pass |
| | | | 0.2 | 195 | 164 | Pass |
| | | 50 | 0.5 | 203 | 155 | Pass |
| | | | 0.2 | 199 | 151 | Pass |
| | Central Portion R [mm] | Single R Portion Length /Roller Length [%] | Amount of Falling of End Portion/Roller Diameter [%] | Life [hrs] | | Determination |
| Comparative Example (2) Composite Crowning | | | | No Misalignme nt | With Misalignme nt | |
| | 2,000 | 30 | 0.6 | 92 | 83 | Fail |
| | | 40 | 0.5 | 148 | 111 | Fail |
| | 5,000 | 50 | 0.2 | 198 | 106 | Fail |
| | | 60 | 0.1 | 191 | 55 | Fail |

In addition, Table 2 shows experimental results in a case of using the cylindrical roller 30 in which the central portion 32a of the rolling contact surface 32 in the axial direction was a single circular arc and both end portions 32b thereof in the axial direction had logarithmic curve shape so as to cause the amount of the drop to change. As can be seen from Table 2, within a range in which the central portion 32a in the axial direction was a single circular arc having the curvature radius ranging from 3,000 mm to 4,000 mm, and the axial length of the central portion 32a in the axial direction with respect to the roller length L of the cylindrical roller 30 and the amount of falling of the end portion with respect to the cylindrical roller diameter Da were regulated as shown in Table 2, it was possible to confirm that the target lifetime was satisfied. Meanwhile, in a case of the rolling contact surface 32 beyond the above-referenced range, in both the state with no misalignment and the state with misalignment, the target lifetime could not be satisfied.

The present invention is not limited to each of the above-described embodiments, and modification, improvement, and the like can be suitably made.

In the above-described embodiment, the cylindrical roller bearing of the present invention has been described as a bearing which is applied to a transmission. However, the cylindrical roller bearing of the present invention is not limited thereto and can also be applied to other devices.

In addition, this application is based on Japanese Patent Application No. 2013-241280, filed November 21, 2013, and Japanese Patent Application No. 2014-181461, filed September 5, 2014, the contents of which are incorporated herein by reference.

### Reference Signs List

I: CYLINDRICAL ROLLER BEARING, 10: OUTER RING, 12: OUTER RING RIB, 13: INNER SIDE SURFACE (CONTACT SURFACE), 20: INNER RING, 22: INNER RING RIB, 23: INNER SIDE SURFACE (CONTACT SURFACE), 30: CYLINDRICAL ROLLER, 32: ROLLING CONTACT SURFACE, D: BEARING OUTSIDE DIAMETER, Da: ROLLER DIAMETER, L: ROLLER LENGTH, W: BEARING WIDTH

## Claims

1. A cylindrical roller bearing comprising:
an outer ring having, on an inner circumferential surface, an outer ring raceway and a pair of outer ring ribs which are provided on both sides of the outer ring raceway in an axial direction;
an inner ring having, on an outer circumferential surface, an inner ring raceway and an inner ring rib which is provided on one side of the inner ring raceway in the axi al direction; and
a plurality of cylindrical rollers disposed between the outer ring raceway and the inner ring raceway,
wherein a radial clearance between the outer ring rib and the inner ring rib is set to be equal to or less than 2 mm, and
a radial height of the outer ring rib is greater than a radial height of the inner ring rib.

2. The cylindrical roller bearing according to Claim 1,
wherein when W represents a bearing width and D represents a bearing outside diameter, D/W is equal to or greater than 3.0, and
when Da represents a roller diameter of the cylindrical roller and L represents a roller length of the cylindrical roller, L/Da ranges from 1.2 to 1.8.

3. The cylindrical roller bearing according to Claim 1 or 2,
wherein a rolling contact surface of the cylindrical roller is subjected to crowning to be formed in a single circular arc having a curvature radius ranging from 300 mm to 700 mm, and
a slope ranging from 10 degrees to 30 degrees is formed on a contact surface of the outer ring rib and the inner ring rib with respect to the cylindrical roller.

4. The cylindrical roller bearing according to Claim 1 or 2,
wherein a rolling contact surface of the cylindrical roller is subjected to composite crowning in which a central portion thereof in the axial direction is a single circular arc having a curvature radius ranging from 3,000 mm to 4,000 mm and both side portions of the central portion in the axial direction have logarithmic curve shape so as to cause an amount of a drop to change, and
a slope ranging from 10 degrees to 30 degrees is formed on a contact surface of the outer ring rib and the inner ring rib with respect to the cylindrical roller.

5. A transmission bearing device,
wherein an input shaft or a driven shaft to which engine torque is input is rotatably supported by at least a slide bearing and the cylindrical roller bearing according to any one of Claims 1 to 4, and
the cylindrical roller bearing bears a thrust load in one direction and permits a relative misalignment between the outer ring and the inner ring.

6. The transmission bearing device according to Claim 5,
wherein lubricating oil is supplied to the cylindrical roller through an ope ning portion between the outer ring and the inner ring on a side opposite to a s ide on which the inner ring rib is provided.
